# EUROPÄISCHE PATENTANMELDUNG

(11) **EP 2 853 966 A1**
(43) Veröffentlichungstag der Anmeldung: **01.04.2015**
(21) Anmeldenummer: 13186642.8
(22) Anmeldetag: 30.09.2013
(51) Int. Cl.: G05B 19/418

(54) **Industrielles Automatisierungssystem mit wenigstens einer Steuerung und einem Speicher**

(71) Anmelder: Siemens Aktiengesellschaft, 80333 München (DE)
(72) Erfinder: Dirnfeldner, Rainer, 91341 Röttenbach (DE); Strobl, Gerhard, 91058 Erlangen (DE); Völk-Malter, Andreas, 90768 Fürth (DE)

(57) **Zusammenfassung**

Bei einem industriellen Automatisierungssystem mit wenigstens einer Steuerung (CNC 1 bis CNC 4), die einen Echtzeit-Kern mit einem Prozessor umfasst, mit dem ein auf einem Speicher (EM; EM1, EM2) hinterlegtes Ablaufprogramm (PP 1, AP 1) in Echtzeit ausführbar ist, soll verhindert werden, dass das betreffende Ablaufprogramm (PP 1, AP 1) verändert wird, während es von der Steuerungen (CNC 1 bis CNC 4) ausgeführt wird. Die Erfindung sieht hierzu vor, dassdas Ablaufprogramm (PP 1, AP 1) während dessen Ausführung mit einem Read-Lock belegbar ist zum Verhindern von Änderungen des Ablaufprogrammes (PP 1, AP 1) während dessen Ausführung. Durch den Read-Lock wird beispielsweise das Editieren des Ablaufprogramms (PP 1, AP 1) durch einen Editor verhindert.

## Beschreibung

Die Erfindung betrifft ein Verfahren zum Betrieb eines industriellen Automatisierungssystems mit wenigstens einer Steuerung, wobei die Steuerung einen Echtzeit-Kern mit einem Prozessor umfasst, der ein auf einem Speicher gespeichertes Ablaufprogramm in Echtzeit ausführt.

Ferner betrifft die Erfindung ein industrielles Automatisierungssystem mit wenigstens einer Steuerung, die einen Echtzeit-Kern mit einem Prozessor umfasst, mit dem ein auf einem Speicher hinterlegtes Ablaufprogramm in Echtzeit ausführbar ist.

Es ist eine Vielzahl industrieller Automatisierungssysteme für industrielle Anwendungen bekannt, beispielsweise zur Steuerung bzw. Regelung industrieller Anlagen, Prozesse oder Maschinen. In der Regel umfassen derartige industrielle Automatisierungssysteme wenigstens eine Steuerung, die ein Ablaufprogramm ausführt. Bei der Steuerung handelt es sich beispielsweise um eine speicherprogrammierbare Steuerung (SPS) zur Steuerung einer Anlage oder eines Prozesses oder um eine numerische Steuerung (CNC = Computerized Numerical Control) zur Steuerung einer Werkzeug- oder Produktionsmaschine oder eines Roboters. Häufig umfasst ein industrielles Automatisierungssystem eine Vielzahl an Maschinen oder Anlagen und dementsprechend auch eine Vielzahl an Steuerungen. Traditionell wird ein Ablaufprogramm, das von einer Steuerung abgearbeitet werden soll, in den internen Speicher innerhalb des Echtzeit-Kerns (Runtime-Environment) der Steuerung geladen. Darüber hinaus bieten moderne Steuerungen aber auch die Möglichkeit, Ablaufprogramme von "externen" Speichermedien, also außerhalb des Echtzeit-Kerns angeordneten Speichern wie Festplatten, Speichersticks, CF-Karten, Netzlaufwerken etc. abzuarbeiten. Aus dem Bereich der Informatik sind Locking-Mechanismen bekannt, die häufig bei Prozesssynchronisationen sowie in Datei- und Datenbanksystemen verwendet werden, um atomare und konsistente Lese- und Schreibanforderungen bezüglich bestimmter Dateien zu gewährleisten.

Um eine von einem industriellen Automatisierungssystem ausgehende Gefährdung für Mensch oder Maschine auszuschließen, muss in der Regel verhindert werden, dass ein Ablaufprogramm, welches gerade abgearbeitet wird, zeitgleich verändert werden kann. Würde man dies zulassen, so bestünde die Gefahr, dass der Inhalt des Ablaufprogramms zum Zeitpunkt des Lesens undefiniert ist und damit ein unkontrollierter Zustand entstehen könnte.

Eine bekannte Möglichkeit, einen oben genannten unerwünschten Zustand zu verhindern, besteht darin, dass ein auf einem außerhalb der Echtzeit-Kerns abgelegtes Ablaufprogramm zur Ausführung in einen internen Speicher innerhalb des Echtzeit-Kerns der Steuerung geladen wird und die Software der Steuerung dafür sorgt, dass ein unerwünschtes Verändern des im internen Speicher befindlichen Ablaufprogramms ausgeschlossen ist.

Ferner ist es bekannt, dass zwischen dem externen Speicher und der Steuerung ein weiteres Gerät, beispielsweise ein von einem Benutzer betätigbares Bediengerät, in das Automatisierungssystem eingebunden ist und in diesem Gerät das Ablaufprogramm abgelegt wird, auf das dann die Steuerung zur Ausführung des Ablaufprogramms zugreift. Ein unerwünschtes Editieren des Ablaufprogramms kann bei dieser Konstellation dadurch verhindert werden, dass das Gerät das Editieren des Ablaufprogramms während dessen Ausführung nicht zulässt.

Ein in diesem Zusammenhang bekanntes Implementierungsdetail ist, dass neben dem Ablaufprogramm ein weiteres File angelegt wird, dessen Inhalt der Koordinierung der seitens der Steuerung bzw. seitens eines Benutzers beabsichtigten Zugriffe dient.

Die bisher bekannten Mechanismen haben den Nachteil, dass sie aufgrund von Latenzzeiten bei Zustandsabfragen nicht immer den korrekten Status eines Ablaufprogramms anzeigen und dass sie von einer Kooperation aller Ressourcen in dem Automatisierungssystem abhängig sind. Nur wenn sich alle beteiligten Ressourcen mit Zugriff auf die Speichermedien des Automatisierungssystems strengen Regeln bezüglich Datei-Zugriffen unterwerfen, kann eine unzulässige Veränderung eines Ablaufprogrammes sicher verhindert werden.

Liegt ein Ablaufprogramm auf einem beliebigen Speichermedium außerhalb des Echtzeit-Kerns, so muss man davon ausgehen, dass dieses auch für Standard-Editoren zugänglich ist. Diese berücksichtigen den Zustand einer Steuerung, welche sich des Ablaufprogramms bedient, grundsätzlich nicht.

Die bislang angewendeten Verfahren berücksichtigen weiterhin nicht, dass ein Ablaufprogramm über ein Netzwerk unter Umständen von mehreren Steuerungen gleichzeitig abgearbeitet werden kann. Da ein Programm-Editor nicht immer alle Steuerungen in einem Netzwerk kennt, ist es mit den bisher verwendeten Synchronisations-Mechanismen nicht möglich, kritische Änderungen sicher zu verhindern.

Aufgabe der vorliegenden Erfindung ist es daher, ein Verfahren zum Betrieb eines industriellen Automatisierungssystems sowie ein industrielles Automatisierungssystem anzugeben, bei denen eine unerwünschte Änderung eines auf einem Speicher hinterlegten Ablaufprogrammes sicher verhindert werden kann.

Diese Aufgabe wird bei einem Verfahren zum Betrieb eines industriellen Automatisierungssystems mit wenigstens einer Steuerung, wobei die Steuerung einen Echtzeit-Kern mit einem Prozessor umfasst, der ein auf einem Speicher gespeichertes Ablaufprogramm in Echtzeit ausführt, dadurch gelöst, dassdas Ablaufprogramm mit einem Read-Lock belegt wird, durch den Änderungen des Ablaufprogrammes während der Ausführung verhindert werden.

Ferner wird die Aufgabe bei einem industriellen Automatisierungssystem mit wenigstens einer Steuerung, die einen Echtzeit-Kern mit einem Prozessor umfasst, mit dem ein auf einem Speicher hinterlegtes Ablaufprogramm in Echtzeit ausführbar ist, dadurch gelöst dassdas Ablaufprogramm während dessen Ausführung mit einem Read-Lock belegbar ist, zum Verhindern von Änderungen des Ablaufprogrammes während dessen Ausführung.

Ein Read-Lock bewirkt allgemein, dass eine damit belegte Datei lediglich gelesen, nicht jedoch verändert werden kann, solange der Read-Lock gesetzt ist. Im Rahmen der Erfindung wird durch die Belegung mit einem Read-Lock sichergestellt, dass ein damit belegtes Ablaufprogramm - unabhängig von seinem Ablageort - während der Abarbeitung nicht unzulässig verändert werden kann. Dabei muss sichergestellt sein, dass eine Veränderung des Ablaufprogramms unabhängig von dem Betriebssystem des Rechners, über den auf das Ablaufprogramm zugegriffen werden soll, und insbesondere auch bei der Verwendung von Standard-Editoren, zuverlässig verhindert wird. Daher wird im Zusammenhang mit der Erfindung der sowohl im Filesystem unter dem Betriebssystem "Linux" als auch unter dem Betriebssystem "Windows" zur Verfügung stehende Locking-Mechanismus für Dateien (Files) genutzt. Solange ein Ablaufprogramm abgearbeitet wird, setzt die betreffende Steuerung den so genannten Read-Lock auf die betreffende Datei und verhindert damit eine Veränderung des Ablaufprogrammes, solange der Read-Lock gesetzt ist, unabhängig davon, ob der verwendete Editor, mit dem das Ablaufprogramm ggf. editiert werden soll, die Locking-Mechanismen unterstützt. Betriebssystem-Mechanismen sorgen dafür, dass bei einem gesetzten Read-Lock Änderungen des Ablaufprogrammes grundsätzlich unterbunden werden. Als Änderung des Ablaufprogramms wird dabei jegliche Änderung verstanden, also sowohl inhaltliche Änderungen durch Editieren (neue Programmzeilen einfügen, Programmzeilen löschen etc.) als auch Änderungen der Datei als solche (löschen, verschieben, umbenennen etc.).

Gemäß einer bevorzugten Ausführungsform der Erfindung wird als Locking-Mechanismus der sogenannte Mandatory Read-Lock benutzt. Das bedeutet, dass die Steuerung das Ablaufprogramm nur dann abrufen (lesen bzw. ausführen) kann, wenn sie es auch tatsächlich mit einem entsprechenden Read-Lock belegt und damit das Editieren des Ablaufprogramms für alle anderen Geräte blockiert hat. Dadurch wird insbesondere verhindert, dass die betreffende Steuerung ein nicht mit einem Read-Lock belegtes Ablaufprogramm überhaupt ausführen kann. Zum Lesen bzw. Ausführen des Ablaufprogramms ist das Setzen eines Read-Locks zwingend erforderlich. Auch bekommen damit nur solche Ressourcen Zugriff auf das Ablaufprogramm, die den Locking-Mechanismus unterstützen. Umgekehrt bekommen Ressourcen, die den Locking-Mechanismus nicht unterstützen, keinen Zugriff auf die betreffende Datei.

Weiterhin sieht eine bevorzugte Ausführungsform der Erfindung, insbesondere bei einem Automatisierungssystem, das mehrere Ressourcen (Steuerungen, Bediengeräte, File-Server, Software-Einheiten etc.) umfasst, die auf das Ablaufprogramm Zugriff haben, die Verwendung eines so genannten "Lock-Manager" vor. Dieser verwaltet alle von den Ressourcen abgegebenen Read-Locks und sorgt dafür, dass ein Ablaufprogramm erst dann nicht mehr mit einem Read-Lock belegt ist und daher wieder editiert werden kann, wenn alle von den Ressourcen abgegebenen und von dem Lock-Manager verwalteten Read-Locks für das betreffende Ablaufprogramm zurückgenommen wurden. Durch diese Vorgehensweise ist insbesondere sichergestellt, dass bei der gleichzeitigen Abarbeitung eines Ablaufprogramms durch mehrere Steuerungen nicht eine Steuerung das Editieren des Ablaufprogramms freigibt, obwohl eine andere Steuerung die Abarbeitung des Ablaufprogramms noch nicht beendet hat. Ein weiteres Problem bei einem industriellen Automatisierungssystem mit mehreren Ressourcen und einem Speicher, auf den die Ressourcen Zugriff haben, kann dann entstehen, wenn mehrere Benutzer gleichzeitig das Ablaufprogramm editieren wollen. Die Erfindung sieht hierzu vor, dass ein von einem Benutzer betätigbares Gerät (insbesondere Bediengerät) des industriellen Automatisierungssystems, mit dessen Hilfe das auf dem Speicher gespeicherte Ablaufprogramm editierbar ist, das Ablaufprogramm während des Editierens mit einem so genannten "Write-Lock" belegt. Allgemein bewirkt ein Write-Lock, dass bei einer damit belegten Datei für andere Ressourcen weder Schreib- noch Lesezugriffe und auch keine sonstigen Datei-Änderungen (umbenennen, löschen, verschieben etc.) möglich sind. Das einmal mit einem Write-Lock belegte Ablaufprogramm kann somit erst dann von einem weiteren Gerät (z.B. Bediengerät) editiert werden, wenn das Gerät, welches als erstes den Write-Lock gesetzt hat, diesen wieder zurückgenommen hat. Durch diese Ausführungsform wird verhindert, dass zwei Benutzer gleichzeitig ein Ablaufprogramm editieren, was ebenfalls zu einem fehlerhaften Ablaufprogramm und undefinierten Zuständen bei dessen Ausführung führen könnte. Ferner wird durch den Write-Lock auch ein Lese-Zugriff auf das Ablaufprogramm, beispielsweise durch eine Steuerung, während des Editierens verhindert.

Vorteilhaft ist auch der Write-Lock als sog. Mandatory Write-Lock ausgeführt, so dass ein Editieren des Ablaufprogrammes (Schreibzugriff) prinzipiell nur dann möglich ist, wenn das Gerät (Steuerung, Bediengerät, Programmiergerät etc.), mittels dessen das Ablaufprogramm editiert werden soll, einen Write-Lock auf das Ablaufprogramm gesetzt und damit den Zugriff (Schreiben oder Lesen) für alle anderen Ressourcen auf das Ablaufprogramm blockiert hat. Das Setzen des Write-Locks ist somit zum Editieren zwingend erforderlich. Ressourcen, die den Locking-Mechanismus nicht unterstützen, haben keinen Zugriff auf die betreffende Datei (das Ablaufprogramm).

Die Erfindung wird nachfolgend anhand eines Ausführungsbeispiels näher erläutert. Es zeigen:
- FIG 1: eine Numerische Steuerung im Blockschaltbild,
- FIG 2: ein industrielles Automatisierungssystem im Block-schaltbild und
- FIG 3: einen zeitlichen Ablauf bei der Ausführung eines erfindungsgemäßen Verfahrens zum Betrieb eines industriellen Automatisierungssystems.

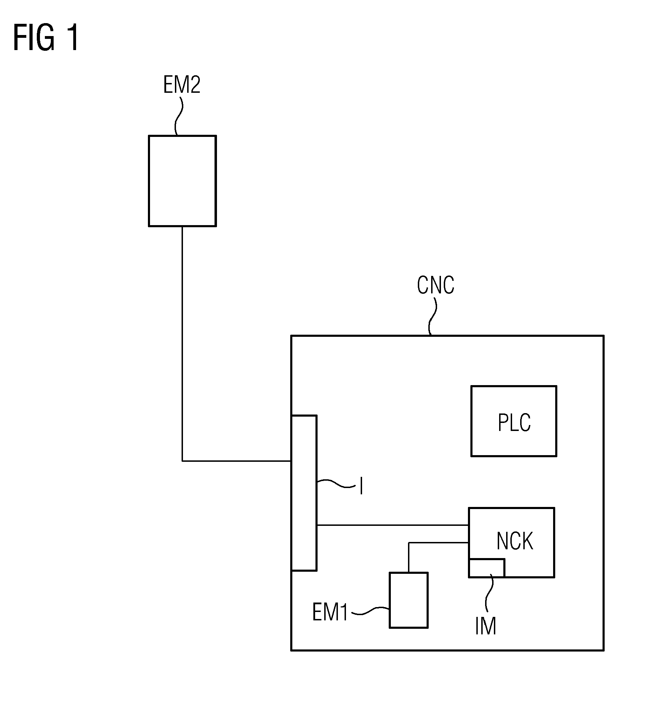

Figur 1 zeigt eine Numerische Steuerung (Computerized Numerical Control) CNC im stark vereinfachten Blockschaltbild. Diese umfasst einen Echtzeit-Kern NCK (Numerical Control Kernal, auch "Runtime Environment" genannt) mit einem Prozessor, der ein Ablaufprogramm, insbesondere ein Teileprogramm, in Echtzeit abarbeitet. Gewöhnlich befindet sich dabei das Teileprogramm in einem internen Speicher IM (internal memory) innerhalb des Echtzeit-Kerns. Es ist jedoch auch möglich, dass das Teileprogramm außerhalb des Echtzeitkerns liegt, z.B. auf einem lösbar mit der CNC verbindbaren Speicher wie etwa einer CF-Karte. Im Ausführungsbeispiel ist innerhalb der CNC, aber außerhalb des NCK, der Speicher EM1 (External Memory 1) vorhanden, auf dem sich ebenfalls ein von dem Prozessor des NCK in Echtzeit abarbeitbares Teileprogramm befindet. Weiterhin umfasst die Numerische Steuerung CNC gemäß dem Ausführungsbeispiel eine Schnittstellen-Baugruppe I (Interface), durch die die Steuerung Zugriff auf weitere Ressourcen hat und insbesondere in ein Netzwerk einbindbar ist. Dadurch kann die Numerische Steuerung CNC Teil eines umfassenderen industriellen Automatisierungssystems sein. Über das Interface I hat die Numerische Steuerung CNC beispielsweise Zugriff auf den externen Speicher EM2, der beispielsweise als Festplatte in einem PC ausgeführt ist. Auch auf dem externen Speicher EM2 kann ein Teileprogramm gespeichert sein, dass von dem Prozessor innerhalb des Echtzeit-Kerns NCK in Echtzeit abgearbeitet wird.

Gemäß der Erfindung wird das Verändern eines Teileprogrammes durch eine Ressource (Gerät oder Software-Einheit), während es in dem Echtzeit-Kern abgearbeitet wird, dadurch verhindert, dass das Teileprogramm (als Datei) während dessen Abarbeitung mit einem Read-Lock belegt ist.

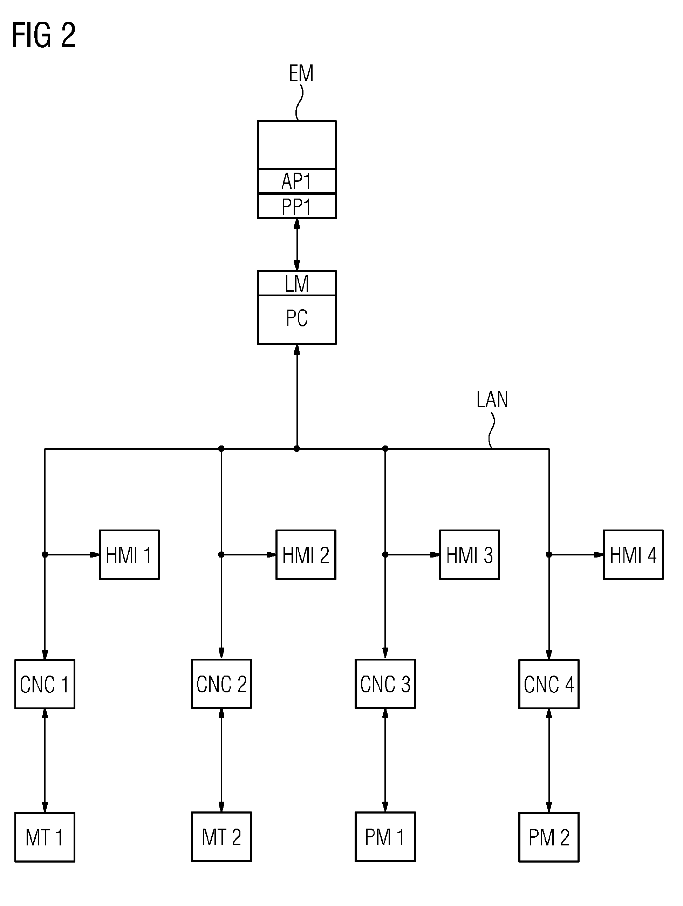

Figur 2 zeigt ein industrielles Automatisierungssystem im Blockschaltbild. Dieses umfasst die beiden Werkzeugmaschinen MT 1 und MT 2 sowie die beiden Produktionsmaschinen PM 1 und PM 2. Zur Steuerung der Werkzeugmaschine MT 1 ist eine numerische Steuerung CNC 1 und zur Steuerung der Werkzeugmaschine MT 2 eine numerische Steuerung CNC 2 vorhanden. Ferner verfügt das industrielle Automatisierungssystem über eine numerische Steuerung CNC 3 zur Steuerung der Produktionsmaschine PM 1 sowie eine numerische Steuerung CNC 4 zur Steuerung der Produktionsmaschine PM 2. Je nach Anwendung ist es möglich, dass sowohl die numerische Steuerung CN 1 als auch die numerische Steuerung CN 2 das gleiche Ablaufprogramm (Teileprogramm) PP 1 ausführen. Die Ausführung kann sowohl zeitgleich als auch nacheinander erfolgen. Zur Erleichterung der Bedienbarkeit des industriellen Automatisierungssystems ist das Teileprogramm PP 1 in einem externen Speicher EM abgelegt, zu dem über ein LAN-Netzwerk sowie einen PC sowohl die numerische Steuerung CNC 1 als auch die numerische Steuerung CNC 2 Zugriff haben. Ebenso können auch die beiden numerischen Steuerungen CNC 3 und CNC 4 auf ein von beiden numerischen Steuerungen verwendbares Ablaufprogramm (Anwenderprogramm) AP 1 zurückgreifen, das ebenfalls in dem externen Speicher EM hinterlegt ist. Weiterhin verfügt das industrielle Automatisierungssystem über die ebenfalls über das LAN-Netzwerk eingebundenen Anzeige- und Bediengeräte HMI 1 bis HMI 4, die sich zur Erleichterung der Bedienbarkeit jeweils lokal in unmittelbarer Nähe zu den Maschinen bzw. den damit verbundenen Steuerungen befinden.

Sowohl über die Anzeige- und Bediengeräte HMI 1 bis HMI 4 als auch über den PC ist es möglich, das Teileprogramm PP 1 oder das Anwenderprogramm AP 1 zu editieren. Um zu verhindern, dass eines der Programme PP 1 bzw. AP 1 editiert wird, während es von einer der Steuerungen CNC 1 bis CNC 4 ausgeführt wird, sind die Steuerungen CNC 1 bis CNC 4 dazu ausgebildet, das betreffende Programm bei einem Programmaufruf mit einem Read-Lock zu versehen. Dabei erfolgt der Read-Lock vorteilhaft über das auf dem PC installierte Betriebssystem (z.B. Windows oder Linux). Ein Lock-Manager LM innerhalb des PC sorgt dafür, dass der Read-Lock für ein bestimmtes Programm erst dann zurückgenommen wird, wenn jede Steuerung, die einen entsprechenden Read-Lock für das Programm gesetzt hat, diesen auch wieder zurückgenommen hat. Der Read-Lock verhindert Schreibzugriffe auf das Teilprogramm PP 1 oder das Anwenderprogramm AP 1 und damit eine Veränderung desselben, während es von wenigstens einer der Steuerungen aufgeführt wird.

Weiterhin können bei dem gezeigten industriellen Automatisierungssystem mittels der Anzeige- und Bediengeräte HMI 1 bis 4 sowie mittels des PC Veränderungen an dem Teilprogramm PP 1 bzw. dem Anwenderprogramm AP 1 vorgenommen werden. Um zu verhindern, dass zwei Benutzer gleichzeitig eines der Programme editieren, ist ein Write-Lock Mechanismus vorgesehen. Das zuerst auf ein betreffendes Programm zugreifende Gerät setzt den Write-Lock, so dass nachfolgend auf das Programm durch ein anderes Gerät weder lesend noch schreibend zugegriffen werden kann, solange bis der Write-Lock wieder zurückgenommen wird.

Vorzugsweise ist der Read-Lock als Mandatory Read-Lock und der Write-Lock als Mandatory Write-Lock ausgeführt (mandatory = zwingend), so dass es für ein Gerät zwingend erforderlich ist, einen entsprechenden Lock zu setzen, bevor überhaupt ein Zugriff auf ein betreffendes Programm möglich ist.

Anders als in dem gezeigten Ausführungsbeispiel kann der externe Speicher auch an anderer Stelle in das Netzwerk eingebunden sein. "Extern" bedeutet hier, dass auf den Speicher über das Netzwerk von mehreren Steuerungen aus zugegriffen werden kann und der Speicher somit bezüglich wenigstens einer Steuerung als "extern" bezeichnet werden kann. Der externe Speicher könnte sich somit physikalisch beispielsweise auch innerhalb des PCs oder innerhalb eines der Bediengeräte befinden oder über eine Schnittstelle an ein Bediengerät angebunden sein.

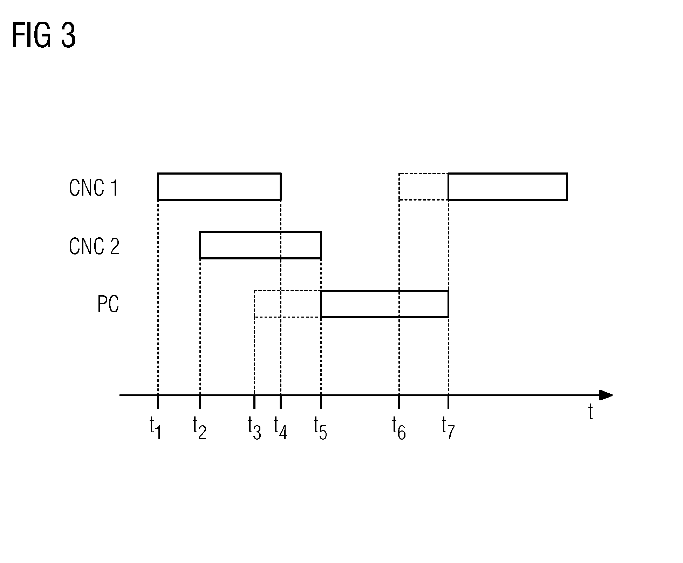

Das erfindungsgemäße Verfahren wird nachfolgend noch anhand von Figur 3 veranschaulicht. Dabei ist der Aufruf des Teileprogrammes PP 1 von verschiedenen Geräten über der Zeit t dargestellt. Zum Zeitpunkt t1 erfolgt der Aufruf und der Beginn der Ausführung des Teileprogramms PP 1 durch die Steuerung CNC 1. Durch diesen Aufruf wird für das Teileprogramm PP 1 ein Read-Lock gesetzt. Nachfolgend erfolgt zum Zeitpunkt t2 der Aufruf und der Beginn der Ausführung des Teileprogramms PP 1 durch die Steuerung CNC 2, wobei auch hier ein Read-Lock gesetzt und in einem Lock-Manager verwaltet wird. Zum Zeitpunkt t3 erfolgt eine Anforderung für einen Schreibzugriff auf das Teileprogramm PP 1 durch den PC. Dieser wird durch die gesetzten Read-Locks verhindert und befindet sich in einer Warteschleife (veranschaulicht durch die gestrichelte Darstellung des betreffenden Balkens in Figur 3). Zum Zeitpunkt t4 wird die Ausführung des Teileprogramms PP 1 durch die CNC 1 beendet. Da das Programm noch durch die CNC 2 ausgeführt wird, befindet sich der angeforderte Schreibzugriff auf das Programm durch den PC noch immer in der Warteschleife. Erst zum Zeitpunkt t5, in dem auch die Abarbeitung des Teileprogramms PP 1 durch die CNC 2 beendet und der entsprechende Read-Lock aufgehoben wurden, kann das Editieren des Teileprogramms PP 1 mittels Schreibzugriffen durch den PC erfolgen. Ein Aufruf des Teileprogramms PP 1 durch die Steuerung CNC 1 zum Zeitpunkt t6, in dem das Editieren des Teileprogramms PP 1 durch den PC noch nicht beendet ist, führt nicht zur Ausführung des Programms. Stattdessen befindet sich der Programmaufruf in einer Warteschleife. Erst nachdem das Editieren des Teileprogramms PP 1 durch den PC beendet und ein entsprechendes Write-Lock im Zeitpunkt t7 zurückgesetzt wurde, kann das - nun veränderte - Teileprogramm PP 1 durch die Steuerung CNC 1 abgearbeitet werden.

## Patentansprüche

1. Verfahren zum Betrieb eines industriellen Automatisierungssystems mit wenigstens einer Steuerung (CNC 1 bis CNC 4), wobei die Steuerung (CNC 1 bis CNC 4) einen Echtzeit-Kern (NCK) mit einem Prozessor umfasst, der ein auf einem Speicher (EM; IM, EM1, EM2) gespeichertes Ablaufprogramm (PP 1, AP 1) in Echtzeit ausführt,
**dadurch gekennzeichnet, dass** das Ablaufprogramm (PP 1, AP 1) mit einem Read-Lock belegt wird, durch den Änderungen des Ablaufprogrammes (PP 1, AP 1) während dessen Ausführung verhindert werden.

2. Verfahren nach Anspruch 1, wobei der Speicher (EM; EM1, EM2), auf dem das Ablaufprogramm (PP 1, AP 1) gespeichert ist, außerhalb des Echtzeit-Kerns (NCK) angeordnet ist.

3. Verfahren nach Anspruch 1, wobei der Speicher (EM; EM2), auf dem das Ablaufprogramm (PP 1, AP 1) gespeichert ist, außerhalb der Steuerung (CNC 1 bis CNC 4) angeordnet ist.

4. Verfahren nach einem der vorherigen Ansprüchen, wobei das industrielle Automatisierungssystem mehrere Ressourcen umfasst, die auf den Speicher (EM; EM1, EM2) und das darin gespeicherte Ablaufprogramm (PP 1, AP 1) zugreifen können, und wobei ein Lock-Manager (LM) vorhanden ist, der die von den Ressourcen abgegebenen Read-Locks verwaltet und dafür sorgt, dass das Ablaufprogramm (PP 1, AP 1) erst dann nicht mehr mit einem Read-Lock belegt ist, wenn alle von den Ressourcen abgegebenen und von dem Lock-Manager (LM) verwalteten Read-Locks zurückgenommen wurden.

5. Verfahren nach einem der vorherigen Ansprüche, wobei das in dem Speicher (EM; EM1, EM2) gespeicherte Ablaufprogramm (PP 1, AP 1) editierbar ist und wobei das Ablaufprogramm (PP 1, AP 1) während des Editierens mit einem Write-Lock belegt wird.

6. Verfahren nach einem der vorherigen Ansprüche, wobei der Read-Lock als Mandatory Read-Lock und/oder der Write-Lock als Mandatory Write-Lock implementiert ist bzw. sind, so dass eine Ressource zum Zugriff auf das Ablaufprogramm (PP 1, AP 1) dieses zwingend mit einem Read-Lock bzw. Write-Lock belegen muss.

7. Industrielles Automatisierungssystem mit wenigstens einer Steuerung (CNC 1 bis CNC 4), die einen Echtzeit-Kern (NCK) mit einem Prozessor umfasst, mit dem ein auf einem Speicher (EM; EM1, EM2) hinterlegtes Ablaufprogramm (PP 1, AP 1) in Echtzeit ausführbar ist,
**dadurch gekennzeichnet, dass** das Ablaufprogramm (PP 1, AP 1) während dessen Ausführung mit einem Read-Lock belegbar ist zum Verhindern von Änderungen des Ablaufprogrammes (PP 1, AP 1) während dessen Ausführung.

8. Industrielles Automatisierungssystem nach Anspruch 7, wobei der Speicher (EM; EM1, EM2), auf dem das Ablaufprogramm (PP 1, AP 1) gespeichert ist, außerhalb des Echtzeit-Kerns (NCK) angeordnet ist.

9. Industrielles Automatisierungssystem nach Anspruch 7, wobei der Speicher (EM; EM2), auf dem das Ablaufprogramm (PP 1, AP 1) gespeichert ist, außerhalb der Steuerung (CNC 1 bis CNC 4) angeordnet ist.

10. Industrielles Automatisierungssystem nach einem der Ansprüche 7 bis 9, wobei das industrielle Automatisierungssystem mehrere Ressourcen umfasst, die auf den Speicher (EM; EM1, EM2) und das darin gespeicherte Ablaufprogramm (PP 1, AP 1) zugreifen können, und wobei ein Lock-Manager (LM) vorhanden ist, der die von den Ressourcen (CNC 1 bis CNC 4) abgegebenen Read-Locks verwaltet und dafür sorgt, dass das Ablaufprogramm (PP 1, AP 1) erst dann nicht mehr mit einem Read-Lock belegt ist, wenn alle von den Ressourcen (CNC 1 bis CNC 4) abgegebenen und von dem Lock-Manager (LM) verwalteten Read-Locks zurückgenommen wurden.

11. Industrielles Automatisierungssystem nach einem der Ansprüche 7 bis 10, wobei das in dem Speicher (EM; EM1, EM2) gespeicherte Ablaufprogramm (PP 1, AP 1) editierbar ist und wobei das Ablaufprogramm (PP 1, AP 1) während des Editierens mit einem Write-Lock belegbar ist.

12. Industrielles Automatisierungssystem nach einem der Ansprüche 7 bis 11, wobei der Read-Lock als Mandatory Read-Lock und/oder der Write-Lock als Mandatory Write-Lock implementiert ist bzw. sind, so dass eine Ressource zum Zugriff auf das Ablaufprogramm (PP 1, AP 1) dieses zwingend mit einem Read-Lock bzw. Write-Lock belegen muss.
